# EUROPEAN PATENT APPLICATION

(11) **EP 2 846 305 A1**
(43) Date of publication of application: **11.03.2015**
(21) Application number: 13195134.5
(22) Date of filing: 29.11.2013
(51) Int. Cl.: G06Q 50/28, G06F 21/31, G06F 21/62, G06F 21/64

(54) **System of handling shipment contracts and method thereof**

(30) Priority: 10.09.2013 HK 13110454
(71) Applicant: Global Logistics System (HK) Co., Ltd., Lantau (HK)
(72) Inventor: The designation of the inventor has not yet been filed
(74) Representative: Boult Wade Tennant

(57) **Abstract**

A method is disclosed for handling shipment contracts comprising the steps of: (a) sending a first message with a first encrypted data therein to at least one consolidator, the message comprising a unique shipment contract from a carrier; (b) authenticating the consolidator of interest by using the first encrypted data; (c) sending a second message with a second encrypted data to the correspondence address of the consolidator of interest; (d) authenticating the consolidator of interest by using the second encrypted data; and (g) generating a temporary account for the consolidator of interest at the web portal for completing the shipment contract to the carrier using a unique identifier of the master consolidator. A system for handling shipment contracts and data exchange is also disclosed.

## Description

### FIELD OF INVENTION

This invention relates to a system and a method for handling shipment contracts and data exchange among logistics providers.

### BACKGROUND OF INVENTION

Traditionally, in the business of logistics, the carriers usually offer shipment contracts to consolidators and the consolidators often work together to fulfill the shipment contracts.

As such, logistics providers (including carriers and consolidators) spend substantial amount of human resources to handle shipment contracts. A lot of communications and paper works are generated and exchanged among different logistic providers to disseminate shipping orders, recruit freight forwarders, and to ensure that the shipment is properly handled across the entire chain of logistic operations. The overall procedure is complex and error-prone. The logistics providers have to spend a huge amount of time and resource to document each communication and paper work for each shipment. This leads to a considerable delays and low productivity. As such, the traditional way of handling shipment contracts cannot handle time-critical transactions effectively, which is increasingly important nowadays.

### SUMMARY OF INVENTION

In the light of the foregoing background, it is an object of the present invention to provide a system and a method for handling shipping contracts and online exchanging data among logistics providers. Through the online system that implements the present invention, operating expenses of the logistics providers can be reduced and the flow of information among the logistic providers can be more efficient and effective. In addition, the logistics providers can free up additional resources for their core business. Last but not least, the present invention can help logistics providers of all sizes to handle time-critical transactions effectively, thereby enhancing their competitiveness.

Accordingly, the present invention, in one aspect, is a method for handling shipment contracts by a master consolidator comprising the steps of: (a) sending a first message with a first encrypted data therein to at least one consolidator through a web portal, the message comprising a unique shipment contract from a carrier; (b) receiving the first encrypted data from a consolidator of interest and a mailing address of the consolidator of interest at said web portal; (c) authenticating the consolidator of interest by using the first encrypted data; (d) sending a second message with a second encrypted data to the correspondence address of the consolidator of interest; (e) receiving the second encrypted data from the consolidator of interest at web portal; (f) authenticating the consolidator of interest by using the second encrypted data; and (g) generating a temporary account for the consolidator of interest at the web portal for completing the shipment contract to the carrier using a unique identifier of the master consolidator.

In an embodiment of the present invention, the first encrypted data further comprises a secret number, the unique shipment contract and a time stamp and is encrypted by a first key.

In another exemplary embodiment, the second encrypted data further comprises a password secret and is encrypted by a second key.

In yet another embodiment, the first message and the second messages further comprises a first clickable link and a second clickable link respectively; the first clickable link directing the consolidator of interest to a first web page of the web portal when said consolidator of interest clicks on the first clickable link; the second clickable link directing the consolidator of interest to a second web page of the web portal when the consolidator of interest clicks on the second clickable link.

In another embodiment, the method further comprises a step of prohibiting at least one second consolidator to respond to the first message once step (d) is successfully completed.

According to another aspect of the present invention, a computer system for handling shipment contracts comprising a web portal, the web portal further comprising: (a) a first module for receiving a shipment contract by a master consolidator from a carrier; (b) a second module that is capable of recruiting registered consolidator and unregistered consolidator; (c) a third module for the registered and unregistered consolidator to respond to the shipment contract; and (d) a fourth module for connecting to a network communication device of the registered and unregistered consolidator; the registered and unregistered consolidator executing said shipment contract on behalf of the master consolidator.

In one embodiment, the second module further comprises a messaging module; the messaging module forwarding encrypted data to the registered consolidator and the unregistered consolidator.

In another embodiment, the master consolidator is identified by a first unique identification; the registered consolidator of the third module is identified by a second identification; the external consolidator is identified by a third identification.

In yet another embodiment, the fourth module attaches the first unique identification of the master consolidator when fulfilling the shipment contract by the registered consolidator and the unregistered consolidator.

In another embodiment, the fourth module converts the second unique identification of the registered consolidator to the first unique identification of the master consolidator when fulfilling the shipment contract.

### BRIEF DESCRIPTION OF FIGURES

Fig. 1 depicts a contract handling and data exchange system according to the present invention.
Fig. 2 shows the different modes of the contract handling and data exchange system according to the present invention.
Fig. 3 is a data flow diagram in the contract handling and data exchange system according to the present invention.
Fig. 4 shows the operating procedure of key mode, which is one mode of operations in contract handling and data exchange among the consolidators and carriers.
Fig. 5 shows the operating procedure of registered mode, which is another mode of operations in contract handling and data exchange among the consolidators and carriers.
Fig. 6 shows the operating procedure of host-to-host mode, which is yet another mode of operations in contract handling and data exchange among the consolidators and carriers.
Fig. 7 shows the generation of a first encrypted data to be included in a message forwarded to at least one consolidator.
Fig. 8 shows the generation of a second encrypted data to be included in a message forwarded to at least one consolidator.
Fig. 9 shows the handling terminal of the contract handling and data exchange system according to the present invention.

### DETAILED DESCRIPTION OF THE PREFERRED EMBODIMENTS

As used herein and in the claims, "comprising" means including the following elements but not excluding others.

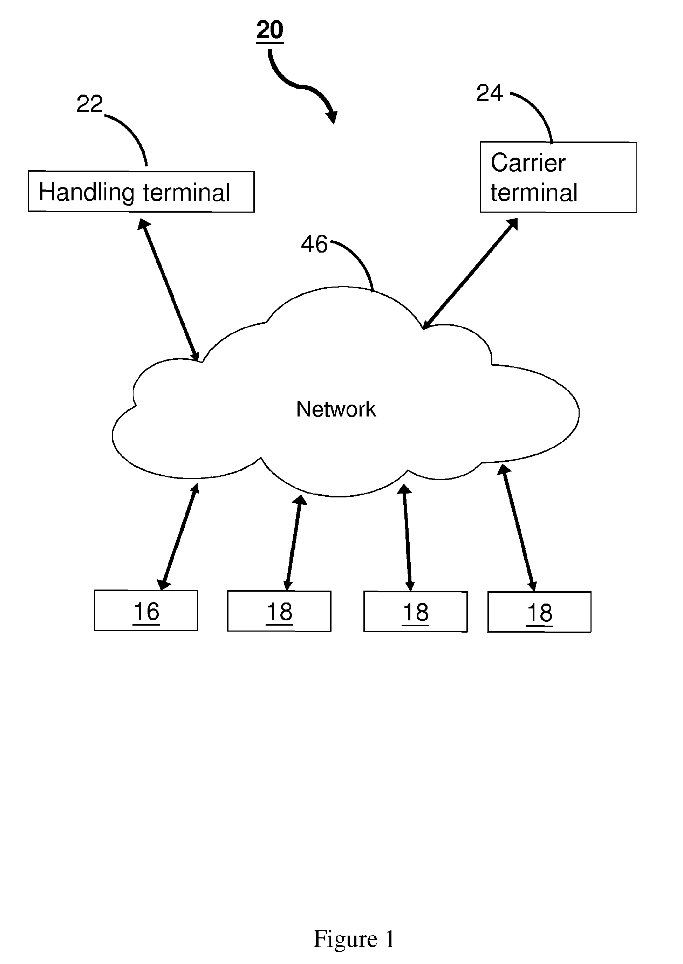

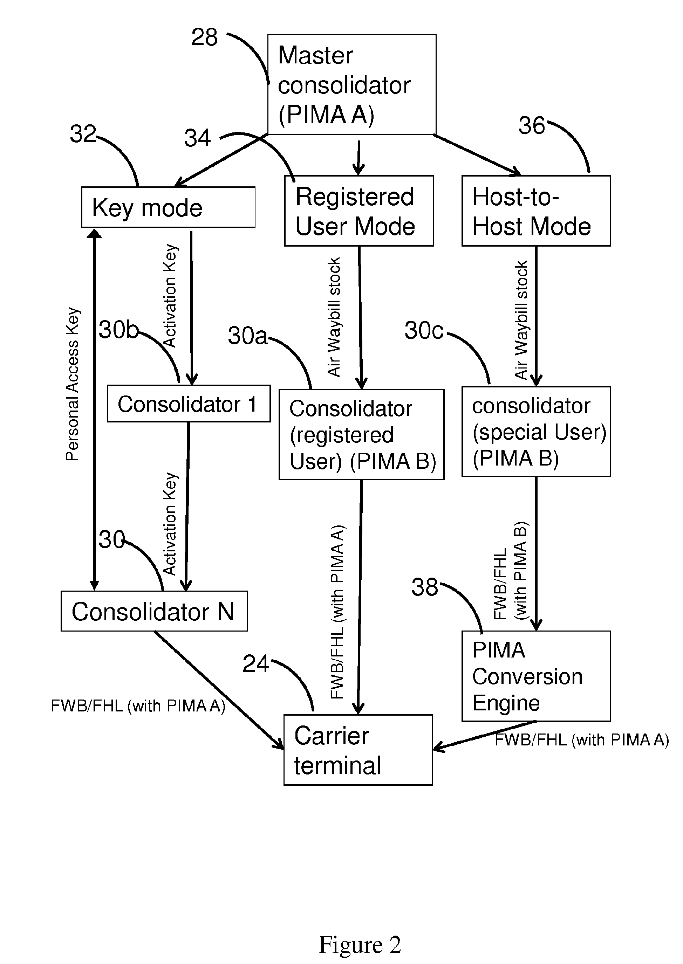

Referring now to Fig. 1, in one embodiment of the present invention is a contract handling and data exchange system 20 for handling shipment contracts and exchanging data through a network 46 among logistics providers. It comprises a handling terminal 22, at least one carrier terminal 24, at least one master consolidator network communication device 16 and at least one of consolidator network communication device 18 , which are all connected to a network 46. In one embodiment, the network 46 is a data communication network. In a further embodiment, it is the Internet. In another embodiment, the handling terminal 22 is a computer server hosting a web portal. In one embodiment, the network communication device and the carrier terminal are selected from a group consisting of computer server, personal computer, mobile phone, personal data assistance device (PDA) and/or tablet. The handling terminal 22, the carrier terminal 24, master consolidator network communication device 16 and the consolidator network communication device 18 device are capable of exchanging data among themselves via the network 46. The consolidator network communication device 18 is also capable of receiving electronic mails (emails). In operation, the carrier terminal 24, master consolidator 28 register their identities to the handling terminal 22 so the handling terminal 22 is aware of their presence. Fig. 2 shows the different modes of operation of the contract handling and data exchange system 20 according to the present invention. There are three modes of operations, namely key mode 32, registered user mode 34 and host-to host mode 36, for handling shipment contracts and exchanging data online among the logistics providers. Every consolidator has its unique identifier. A master consolidator 28 is identified by a first unique identifier; the registered consolidator 30a is identified by a second unique identifier; the unregistered consolidator 30b is identified by a third unique identifier. As the carrier terminal 24 only receives information from the master consolidator 28 , all the information received by the carrier terminal 24 has to contain the unique identifier of the master consolidator 28 (i.e. the first unique identifier) in all three modes. The key mode 32 is used to handle shipment contracts with either registered consolidator 30a or unregistered consolidator 30b. The key mode 32 allows both registered consolidator 30a and/or unregistered consolidator 30b to transfer information for completing the shipment contract on behalf of the master consolidator 28 to the carrier's terminal 24. The registered user mode 34 and the host-to-host mode 36 are used to handle shipment contracts among the master consolidator 28, at least one registered consolidator 30a and at least one the carrier.

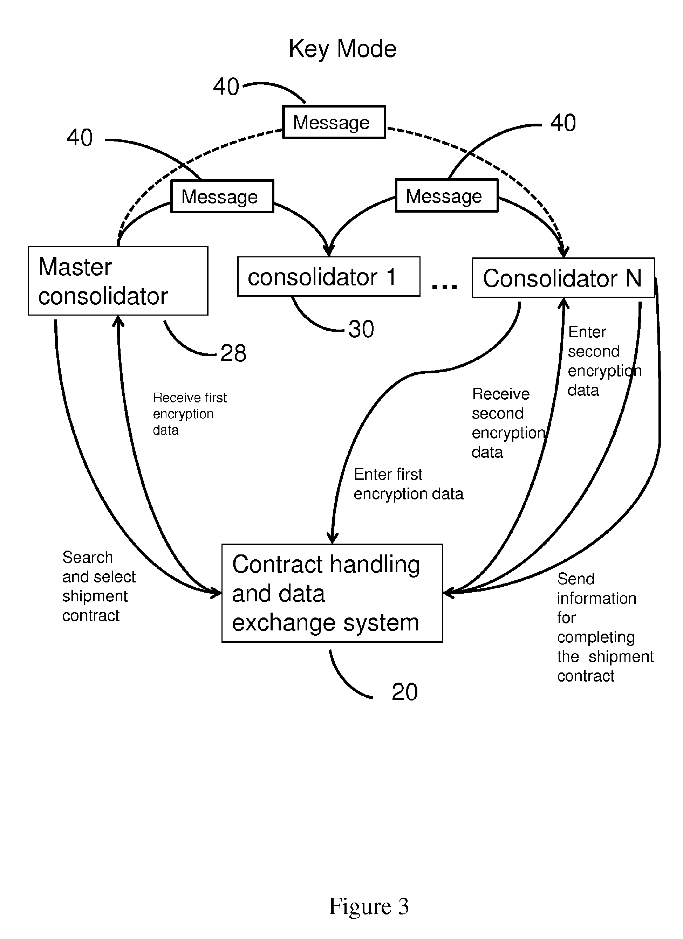

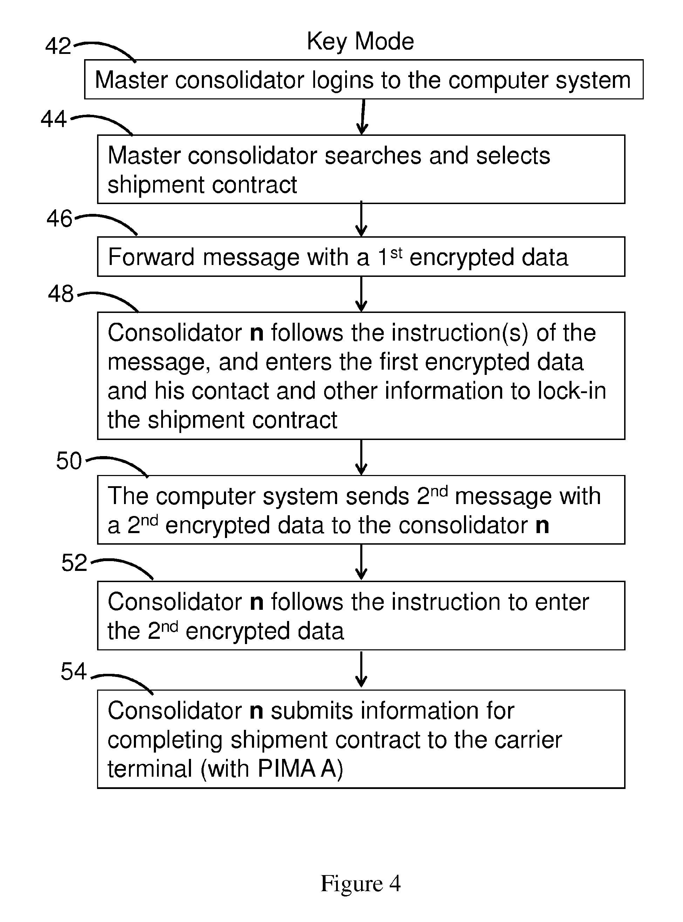

Referring now to Fig. 3 and Fig.4, in one embodiment, the key mode 32 allows the master consolidator 28 to handle shipment contract with the registered consolidator 30a and/or the unregistered consolidator 30b of the system 20. Through the key mode 32, the registered consolidator 30a and/or the unregistered consolidator 30b can also submit the necessary information of corresponding shipment contract to the carrier. In this mode, the master consolidator 28 logins into the handling terminal 22 for searching and selecting a shipment contract offered by the carrier in steps 42 and 44. After selecting the shipment contract, the master consolidator 28 sends at least one message 40 to at least one consolidator 30 in step 46. The message 40 comprises a first encrypted data, the selected shipment contract and information for directing the consolidator to a first authenticating portal. In step 48, the consolidator 30 receiving the message 40 can either accept the shipment contract if he is interested in accepting the shipment contract or he can forward it to other consolidators 30, who do not receive the message 40 from the master consolidator 28. The other consolidators 30 can in turn forward the message 40 to yet another consolidators 30 and so on. When a consolidator 30 is interested in accepting the shipment contract, he then responds to the message 40 by submitting a first authenticating information at the first authenticating portal. The first authenticating information comprises the first encrypted data, the selected shipment contract and the consolidator's contact information. When it is received by the first authenticating portal, the first encrypted data is decrypted to extract the information from the encrypted data and compared with at least one first unique data 82 and private key 80 (first key) (the details of the first unique data and private key will be discussed in the later paragraph) associated with that particular shipment contract. If they match, then the first authenticating portal assigns the selected shipment contract to the consolidator 30 that responds to the message 40. (hereafter referred as the interested consolidator). Afterwards, the first authenticating portal will no longer accept any other consolidators 30 that respond to the same message 40. In step 50, a second message is forwarded to the interested consolidator 30 via the consolidator's contact found inside the first authenticating information. The second message comprises a second encrypted data, the selected shipment contract and information for directing the interested consolidator 30 to a second authenticating portal in step 52. The interested consolidator 30 is then asked to enter the second encrypted data and the selected shipment contract to the second authenticating portal for verification. Upon successful verification, step 54 is executed. A temporary account for the interested consolidator 30 is generated at the second authenticating portal for the interested consolidator 30 to submit information for completing the shipment contract. Such information includes the first unique identifier of the master consolidator 28. The information submitted by the interested consolidator 30 will be forwarded on behalf of the master consolidator 28 or upon approval of the master consolidator 28 via the contract handling and data exchange system 20 to the carrier terminal 24. From the carrier's point of view, it is as though the master consolidator 28 is submitting information to complete the shipment contract since the first unique identifier of the master consolidator 28 is used.

As discussed above, when a consolidator 30 receives the message 40 from a master consolidator 28, he may forward it to his peers if he is not interested in the shipment contract. Thus the same message 40 may be forwarded to many different consolidators 30. Some of them may not be registered consolidators. Hence the key mode allows the master consolidator to recruit both registered and unregistered consolidators to fulfill the shipment contract. This is done by attaching the information for completing the shipment contract to be submitted to the carrier with the first unique identifier instead of the consolidator's identifier.

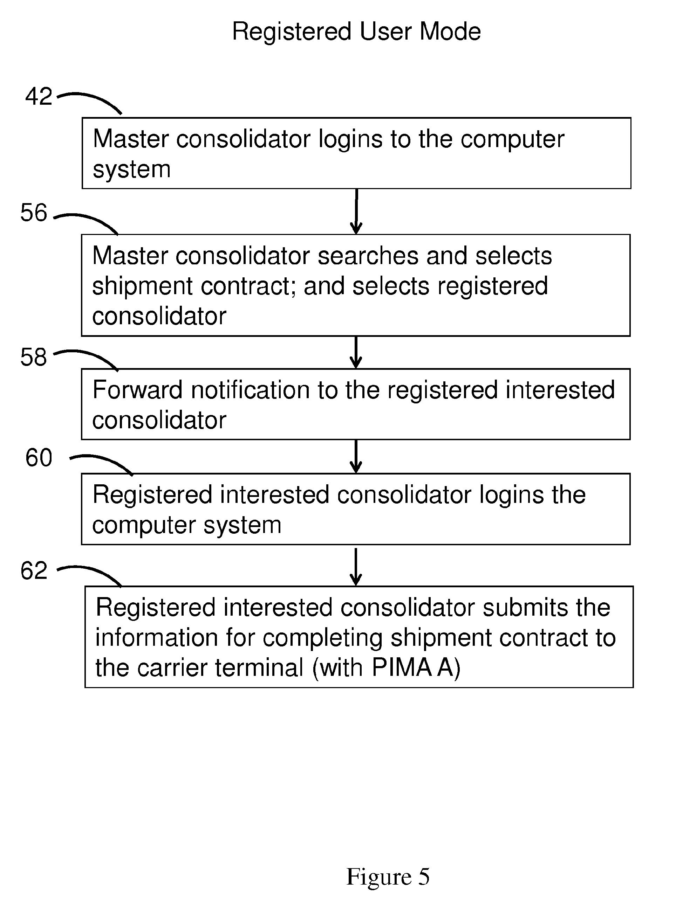

Now referring to the registered user mode 34 of the contract handling and data exchange system 20 according to the present invention as described in Fig. 5. In the registered user mode 34, the master consolidator 28 can handle shipment contracts with at least one registered consolidator 30a directly. The master consolidator 28 logins into the contract handling and data exchanging system 20 for searching and selecting a shipment contract offered from the carrier in steps 42. The system 20 then asks the master consolidator 28 to input the information of at least one registered consolidator 30a (hereafter referred as the registered interested consolidator) after the master consolidator 28 selected the shipment contract in step 56. Having entered the information of the registered interested consolidator 30a, a notification is forwarded to the registered interested consolidator 30a in step 58. The notification informs the registered interested consolidator 30a that he can access the selected shipment contract. In Step 60, upon logging in the system contract handling and data exchange system 20, the selected shipment contract is shown to the registered interested consolidator 30a, who can then submit information for completing the shipment contract on behalf of the master consolidator 28 or upon approval of the master consolidator 28 via the system 20 to the carrier with unique identifier of the master consolidator 28 in step 62. In one embodiment, the master consolidator 28 decides whether the selected consolidator 30a can send information for booking a space and/or time for shipping to the carrier on behalf of the master consolidator 28.

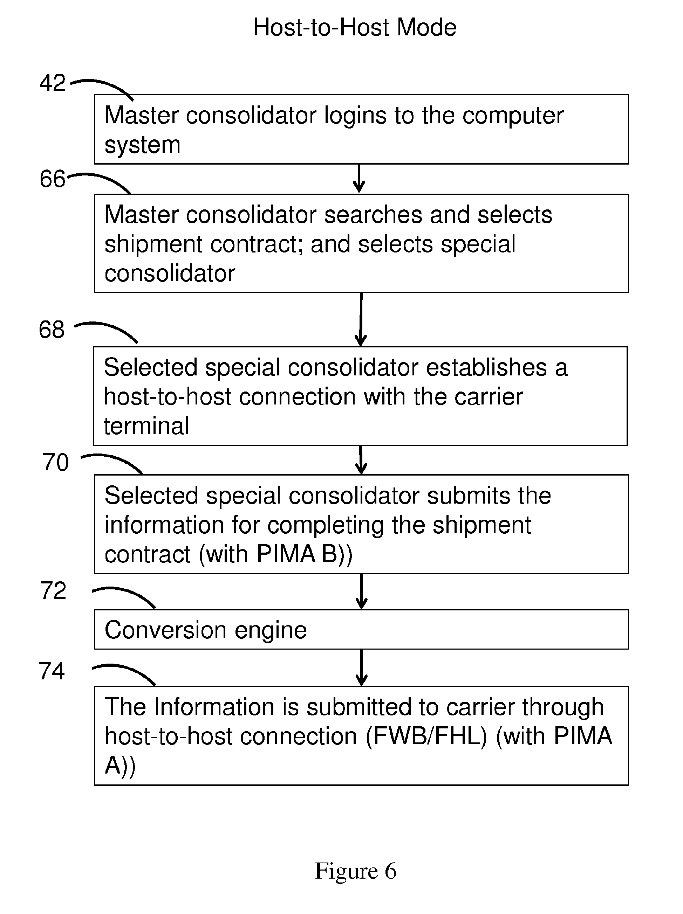

Now turning to the host-to-host mode 36 of the system 20 according to the present invention as described in Fig. 6. In this mode, the carrier, the master consolidator and all other consolidators are all connected by dedicated host-to-host data channels. In one embodiment, they are connected using FTP (File Transfer Protocol) channels. The at least one selected consolidator 30a is able to submit the information to the carrier for completing the shipment contract through host-to-host channel between the communication device of the selected consolidator 30a and the carrier's terminal 24. In step 42, the master consolidator 28 logins the system 20. In step 66, a shipment contract offered from the carrier is searched and selected by the master consolidator 28 as described in the previous modes above. Unlike the registered user mode 34, the system 20 does not allow the master consolidator 28 to handle shipment contract with any registered consolidator 30c under the host-to-host mode 36. Instead, the available consolidators (special consolidators) 30c under this mode are fixed by the system owner. As a result, the master consolidator 28 can only invite at least one special consolidator 30c for handling the shipping contract. It is noted that the special consolidators 30c are selected from the group of registered consolidators 30b . Having selected at least one special consolidator 30c, the selected special consolidator 30c uses the dedicated host-to-host data channel for submitting information for completing the shipment contract in step 68. Since it is a host-to-host connection, the information transmitted from the selected special consolidator 30c comprises second unique identifier of the selected special consolidator 30c in step 70. In order for the carrier terminal 24 to accept the information submitted from the selected special consolidator 30c, the system therefore provides a unique identifier conversion engine to convert the unique identifier of the selected special consolidator 30c to the unique identifier of the master consolidator 28 in steps 72 and 74.

In one implementation, for both the key mode, registered mode and host-to-host mode of operations as described in the previous paragraphs, the message 40 is an e-mail message in one embodiment. In a further embodiment, the information for directing the consolidator to the first or the second authenticating portals is hyperlinks (i.e. first clickable link and second clickable link). In yet another embodiment, the shipment contract is an Air Waybill number. In one embodiment, the consolidator's contact information is in a form of email address. In another embodiment, the master consolidator is a master co-loader. In another embodiment, the consolidator is a co-loader. For key mode and host-to-host mode, in one embodiment, the information to be submitted to the carrier terminal 24 for completing the shipment contract is selected from a group consisting of electronic master air waybill data (FWB), House waybill data (FHL), and electronic house manifest data (CUSEXP). For registered mode, in one embodiment, the information to be submitted to the carrier for completing the shipment contract is selected from a group consisting of information for booking a space and/or time for shipping, electronic master air waybill data (FWB), House waybill data (FHL), and electronic house manifest data (CUSEXP).

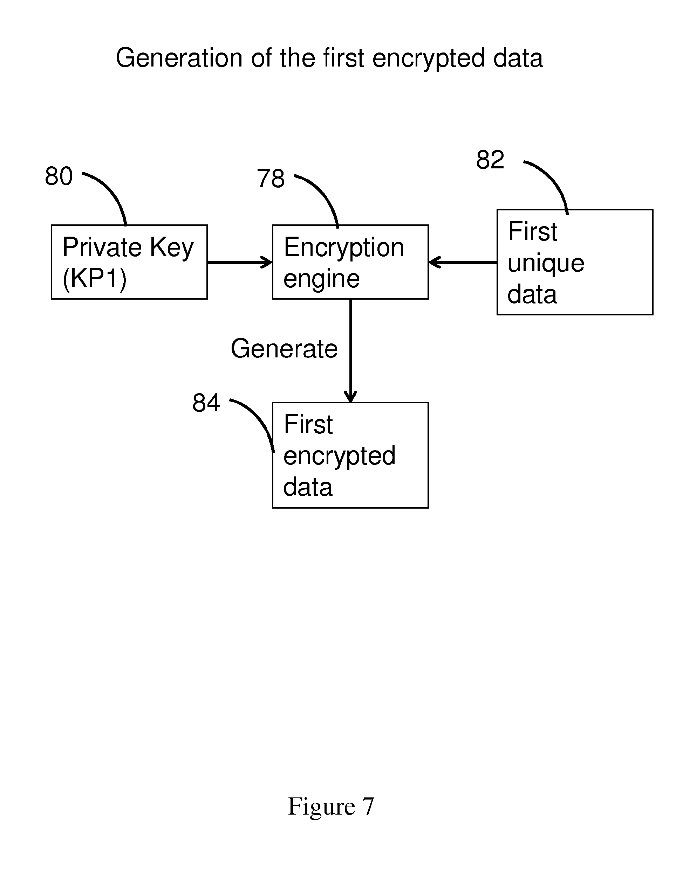

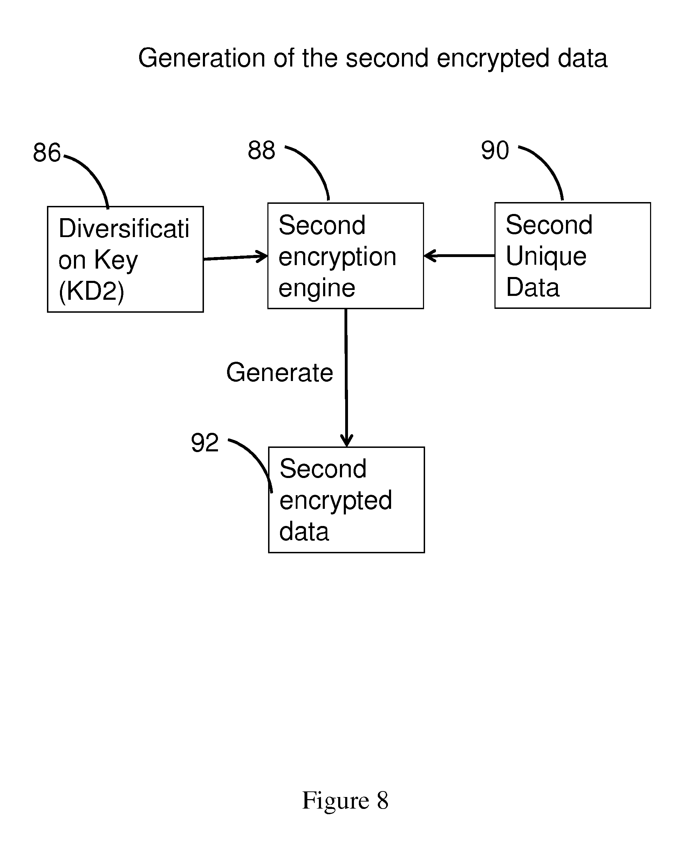

Fig. 7 and Fig. 8 show an embodiment of generating first and second encrypted data respectively. A shown in Fig. 7, the first encrypted data is generated by encrypting the private key 80 and at least one first unique data 82 for encryption by a first encryption engine 78. In one embodiment, the first unique data 82 is selected from a group consisting of the shipment contract, the time of generating the encrypted data and random number(s). Regarding second encrypted data, Fig. 5 shows that it is generated by encryting a diversification key 86 (second key), and at least one unique datum or user password of consolidator 30 of interest 90 (including a password of a temporary account created by the system 20 for consolidator of interest) for encryption by a second encryption engine 88. In one embodiment, the first and second encryption engines both use triple DES as the encryption algorithm.

In one embodiment, the contract handling and data exchange system 20 allows the master consolidator 28 to reclaim the shipment contract from the consolidator 30 if the consolidator 30 fails to submit any information for completing that particular shipment contract within a pre-determined period of time after the consolidator 30 has secured the shipment contract. In a further embodiment, the contract handling and data exchange system 20 allows the master consolidator 28 and the consolidator 30 to view the completed shipment contract transaction history. In one embodiment, the system 20 allows the consolidator 30 to review the information they have submitted for completing the shipment contract.

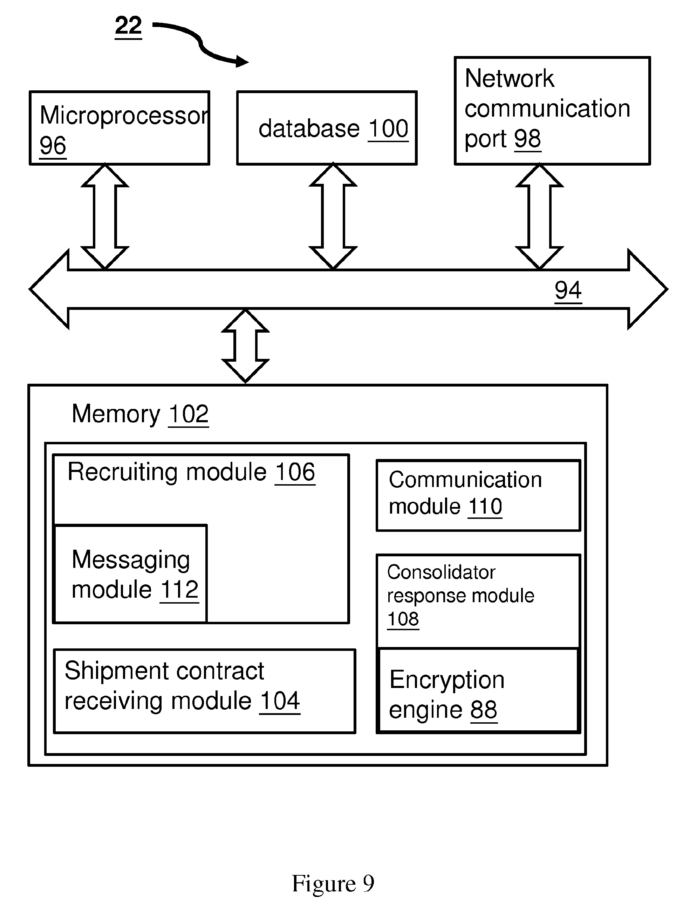

According to another aspect of the present invention as shown in Fig. 9, the handling terminal 22 of the contract handling and data exchange system 20 comprises a database 100, microprocessor 96, a memory, a network communication port 98 and one or more input and/or output devices that are communicatively coupled via a local interface 94. The local interface 94 can be, for example but not limited to, one or more buses or other wired or wireless connections. The local interface 43 may have additional elements, which are omitted for simplicity, such as controllers, buffers (caches), drivers, repeaters, and receivers, to enable communications. Further, the local interface may include address, control and/or data connections to enable appropriate communications among the aforementioned components. The processor is a hardware device for executing software that is stored in memory. The processor can be virtually any custom made or commercially available processor, a central processing unit (CPU), digital signal processor (DSP) or an auxiliary processor among several processors associated with the terminal, and a semiconductor based microprocessor (in the form of a microchip) or a microprocessor.

The memory 102 can include any one or combination of volatile memory elements (e.g. random access memory (RAM, such as dynamic random access memory (DRAM), static random access memory (SRAM), etc)) and nonvolatile memory elements (e.g., ROM, erasable programmable read only memory (EPROM), electronically erasable programmable memory (EPROM), electronically erasable programmable read only memory (EEPROM), programmable read only memory (PROM), tape, compact disc read only memory (CD-ROM), disk, diskette, cartridge, cassette or the like etc.). Moreover, the memory 102 may incorporate electronic magnetic, optical, and/or other types of storage media. Note that the memory 102 can have a distributed architecture, where various components are situated remote from one another, but can be accessed by the processor. The network communication port 98 can be any device that can establish communication to a data network, an external communication device and the carrier's terminal 24. The network communication port can be wired or wireless, for example but not limited to, LANS, Wi-Fi and mobile communication network.

There are different computer modules stored in the memory 102, which comprises a shipment contract receiving module 104 for receiving a shipment contract by a master consolidator 28 from at least one carrier; a recruiting module 106 for recruiting at least one consolidator 30 to respond to the shipment contract; a consolidator respond module 108 for the registered consolidator 30b or unregistered consolidator 30 to respond to the shipment contract; and a communication module 110 for connecting to an external communication device of the interested consolidator 30 executing the shipment contract on behalf of the master consolidator 28.

The database 100 is used to store various information that is necessary for the operation of shipment contract handling and data exchange system 20 comprising, but not limited to, the unique identifiers of the registered consolidators 30b, the information submitted to the carrier for completing the shipment contracts, the history of submission, the private key 80, the diversification key 86, and the unique identifier of the master consolidator 28.

The shipment contract receiving module 104 is configured to receive a shipment contract by a master consolidator 28 from at least one carrier. It executes step 44 in key mode 32, step 56 in the registered user mode 34 and step 66 in the host-to-host mode 36.

The recruiting module 106 further comprises a messaging module 112, which forwarding encrypted data to the registered consolidator 30b and unregistered consolidator 30. The recruiting module 106 execute steps 46 and 52 in key mode 32. The messaging module 112 also execute step 58 in registered user mode.

The consolidator response module 108 further comprises the first encryption engine 78 and the second encryption engine 88, which execute the steps of generation of the first encrypted data and the second encrypted data. The encryption engines (78 and 88) obtain the necessary data from database to generate the encrypted data. The consolidator response module 108 executes the generation of first encrypted data part of step 46 and steps 48, 50, 52 in the key mode 32.

The communication module 110 is configured to establish a connection between the carrier terminal 24 and the communication device of the interested consolidator for executing the shipment contract on behalf of the master consolidator 28, as well as the master consolidator communication device 16. In the key mode 32 and registered user mode 34, the communication module 110 attaches the first unique identifier of the master consolidator 28 to the information submitted by the interested consolidators 30 before forwarding it to the carrier's server 24. In the Host-to-Host mode 36, the communication module 110 is executed to provide the conversion engine to convert the second unique identifier of the interested special consolidator 30c to the first unique identifier of the master consolidator 28 in host-to-host connection between the carrier's server 24 and the interest special consolidator 30c. The host-to-host connection is established when the interested special consolidators 30c submits the information to fulfill the shipment contract. The communication module 110 executes step 52 in key mode 32, step 62 in registered user mode 34 and steps 70, 72, and 74 in host-to-host mode 36.

Any process descriptions or blocks in flow charts should be understood as representing modules, segments, or portions of code which include one or more executable instructions for implementing specific logical functions or steps in the process and alternative implementations are included within the scope of the embodiments of the present invention in which functions may be executed out of order from that shown or discussed, including substantially concurrently or in reverse order, depending on the functionality involved, as would be understood by those reasonably skilled in the art of the present invention.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

## Claims

1. A method for handling shipment contracts by a master consolidator comprising the steps of:
a ' sending a first message with a first encrypted data therein to at least one consolidator through a web portal, said message comprising a unique shipment contract from a carrier;
b ' receiving said first encrypted data from a consolidator of interest and correspondence mailing address of said consolidator of interest at said web portal;
c ' authenticating said consolidator of interest by using said first encrypted data;
d ' sending a second message with a second encrypted data to said correspondence address of said consolidator of interest;
e ' receiving said second encrypted data from said consolidator of interest at web portal;
f ' authenticating said consolidator of interest by using said second encrypted data; and
g ' generating a temporary account for said consolidator of interest at said web portal for completing said shipment contract to said carrier using a unique identifier of said master consolidator.

2. The method according to claim 1 wherein said first encrypted data further comprises a secret number, said unique shipment contract and a time stamp and is encrypted by a first key.

3. The method according to claim 1 wherein said second encrypted data further comprises a password secret and is encrypted by a second key.

4. The method according to claim 1 wherein said first message and said second messages further comprises a first clickable link and a second clickable link respectively; said first clickable link directing said consolidator of interest to a first web page of said web portal when said consolidator of interest clicks on said first clickable link; said second clickable link directing said consolidator of interest to a second web page of said web portal when said consolidator of interest clicks on said second clickable link.

5. The method according to claim 1 further comprising a step of prohibiting at least one second consolidator to respond to said first message once step (d) of claim 1 is successfully completed.

6. A computer system for handling shipment contracts comprising a web portal; said web portal further comprising:
a ' a first module for receiving a shipment contract by a master consolidator from a carrier;
b ' a second module that is capable of recruiting registered consolidator and unregistered consolidator;
c ' a third module for said registered and unregistered consolidator to respond to said shipment contract; and
d ' a fourth module for connecting to a network communication device of said registered and unregistered consolidator; said registered and unregistered consolidator executing said shipment contract on behalf of said master consolidator.

7. The computer system according to claim 6 wherein said second module further comprises a messaging module; said messaging module forwarding encrypted data to said registered consolidator and said unregistered consolidator.

8. The computer system according to claim 6 wherein said master consolidator is identified by a first unique identification; said registered consolidator of said third module is identified by a second identification; said unregistered consolidator is identified by a third identification.

9. The computer system according to claim 8 wherein said fourth module attaches said first unique identification of said master consolidator when fulfilling said shipment contract by said registered consolidator and said unregistered consolidator.

10. The computer system according to claim 8 wherein said fourth module converts said second unique identification of said registered consolidator to said first unique identification of said master consolidator when fulfilling said shipment contract.
